# EUROPEAN PATENT SPECIFICATION

(11) **EP 4 454 734 B1**
(45) Date of publication and mention of the grant of the patent: **04.02.2026**
(21) Application number: 24190198.2
(22) Date of filing: 25.06.2020
(51) Int. Cl.: B01D 46/00, B01D 46/24

(54) **FILTER ASSEMBLY AND SYSTEM**
FILTERANORDNUNG UND -SYSTEM
ENSEMBLE FILTRE ET SYSTÈME

(30) Priority: 27.06.2019 US 201962867699 P
(43) Date of publication of application: 30.10.2024
(62) Divisional of application: 20751827.5
(73) Proprietor: DONALDSON COMPANY, INC., Bloomington, MN 55431 (US)
(72) Inventor: JOHNSON, Steven A., Minneapolis, 55440-1299 (US)
(74) Representative: PGA S.p.A., Milano, Succursale di Lugano

(56) References cited:
- EP-A1- 3 593 886
- EP-A1- 3 763 431
- DE-A1- 102015 105 059
- US-A- 4 882 051

## Description

### Technological Field

The present disclosure is generally related to filtration systems. More particularly, the present disclosure relates to filter assemblies configured for clean removal and disposal from a filtration system.

### Summary

A filter assembly according to the invention is disclosed in any one of claims 1-12, while a filter system according to the invention is disclosed in any one of claims 13-15.

The technology disclosed herein relates to, in part, a filter assembly. More particularly, the present disclosure relates to assemblies, systems, and methods related to a filter assembly removal from a filtration system and containment of the filter media and particles accumulated thereon. The present disclosure provides for disposal of a contaminated, or used, filter assembly that is removable and replaceable within a filtration system. The filter assembly includes a disposal container fixed to an endcap of the filter assembly to conveniently extend over the filter media as the filter assembly is removed from the filtration system for disposal. The filter assembly provides for cost effective and convenient enclosure of the used filter media within the disposal container to minimize disturbance of the particles and/or containments collected on the filter media during handling for removal and disposal of the filter assembly. In this manner, falling or dislodgment of particles, etc. collected onto the filter media during filtering operations of the filter system is substantially contained by the disposal container during handling and removal of the filter assembly. The containment of the "dirty" filter media during removal from the filtration system and disposal of the filter assembly can provide for minimization or elimination of cleaning of the filter housing, etc. due to dislodging of contaminants form the filter assembly during removal and limit or prevent user exposure to the contaminants.

The filter assembly includes a filter media, an endcap, and a disposal container. The filter media includes a first end, a second end opposing the first end, and a filter body extending between the first end and the second end. The endcap is coupled to the filter media along the first end. The disposal container is fixedly coupled to the endcap. The disposal container is extendable over the second end to sealably contain the filter body.

In some such embodiments, the disposal container is fixedly coupled to an exterior surface of the endcap. Additionally or alternatively, the disposal container is formed as a flexible liner. Additionally or alternatively, the disposal container can be formed to correspond to an exterior of the filter body when in an extended state. Additionally or alternatively, the disposal container is tubular.

Additionally or alternatively, the disposal container includes a first end fixedly coupled to the endcap and a second end opposing the first end, that is open. Additionally or alternatively, the disposal container has a non-extended state and an extended state. In such embodiments, the first end and the second end of the disposal container can be disposed adjacent the endcap in the non-extended state and the second end of the disposal container extends over the second end of the filter body in the extended state. Additionally or alternatively, the disposal container in a non-extended state is fully disposed around a perimeter of the endcap.

Some embodiments described herein relate to a filter system. The filter system includes a filter housing having a clean air portion and a filtration portion, where the clean air and filtration portions are separated by a plate, and a filter assembly removably disposable within the filter housing. The filter assembly includes a filter media, an endcap, and a disposal container. The filter media includes a first end, a second end opposing the first end, and a filter body extending between the first end and the second end. The endcap is coupled to the filter media along the first end. The disposal container is fixedly coupled to the endcap. The disposal container is disposed within the clean air portion of the filter housing when the filter assembly is in use and the disposal container is extendable over the second end to sealably contain the filter body when the filter media is removed from the filter housing.

In some such embodiments, the disposal container has a first end and a second end opposing the first end, and the first end of the disposal container can be fixedly coupled to the endcap and the second end is open. Additionally or alternatively, the second end of the disposal container is releasably attachable to the plate. Additionally or alternatively, the disposal container is configured to be in a compressed state around a perimeter of the endcap until extended to sealably contain the filter body. Additionally or alternatively, the disposal container is extendable within the clean air portion when the filter media is withdrawn from the filtration portion into the clean air portion. Additionally or alternatively, the disposal container is tubular. Additionally or alternatively, the disposal container has a flexible liner.

Some embodiments described herein relate to a method of manufacturing a filter assembly. The method includes coupling an endcap to a first end of a filter media and fixedly coupling a first end of a disposal container to the endcap. The disposal container includes a receiving body extending between opposing first and second ends. The disposal container can be releasably gathered around the endcap and is extendable to fully enclose the filter media within the receiving body.

In some such embodiments, fixedly coupling the first end of the disposal container to the endcap includes heat welding the first end to the endcap. Additionally or alternatively, fixedly coupling the first end of the disposal container to the endcap includes over-molding the first end to the endcap. Additionally or alternatively, fixedly coupling the first end of the disposal container to the endcap includes adhering the first end to the endcap with an adhesive. Additionally or alternatively, the disposal container has a flexible tube.EP3763431A1 discloses a filter assembly having a tubular filter media, closure elements located at opposite parts of the filter media and a protective cover. The protective cover is movable between a folded position and an unfolded position, wherein the filter media is exposed in the folded position and partially covered by the protective cover in the unfolded position. The protective cover has a first end clamped between one of the closure elements and an opposite second end fixed to a fastening element, which engages one of the closure elements in the folded position and the other one of the closure elements in the unfolded position.
DE102015105059A1 discloses a filter assembly suitable to be installed transversally with respect to a direction of an air flow to be filtered. The filter assembly comprises a filter media consisting of a panel and a frame encircling the panel. The filter assembly comprises a protective cover carried by the frame and surrounding the filter media. The cover has a folded configuration in which it exposes the filter media and an unfolded configuration in which it covers the filter media.
US4882051A discloses a filtering device for filtering paint. The device comprises a filter assembly having a filter media and a protective cover engaged at an end of the filter media. The filtering device further includes a container having an outlet and an inlet through which the paint flows. The filter assembly is adapted to be placed in the container to receive paint from the inlet and to feed filtered paint to the outlet. The protective cover allows to prevent the interior of the container from being contaminated by the paint during the filtration process.

The term "fixedly coupled," as used herein, is defined as "attached" in a manner that is not temporary.

The above summary is not intended to describe each embodiment or every implementation. Rather, a more complete understanding of illustrative embodiments will become apparent and appreciated by reference to the following Detailed Description of Exemplary Embodiments and claims in view of the accompanying figures of the drawing.

### Brief Description of the Drawings

The present technology may be more completely understood and appreciated in consideration of the following detailed description of various embodiments in connection with the accompanying drawings.
FIG. 1A is a perspective view of an example filter assembly illustrating the disposal container in an extended state in accordance with aspects of the present disclosure.
FIG. 1B is a perspective view of the example filter assembly of FIG. 1A illustrating the disposal container in a non-extended state in accordance with aspects of the present disclosure.
FIG. 2 is an enlarged partial perspective view of the example filter assembly illustrated in FIG. 1B in accordance with aspects of the present disclosure.
FIG. 3 is an enlarged partial perspective view of the example filter assembly illustrated in FIG. 1A in accordance with aspects of the present disclosure.
FIGS. 4A-4D are enlarged partial cross-sectional views of example filter assemblies. The embodiments of figures 4b, 4c and 4d are not covered by the claims and do not form part of the invention.
FIG. 5A-5D are schematic cross-sectional views of a filtration system having a filter assembly in various states of assembly and removal in accordance with aspects of the present disclosure.
FIG. 6 is an expanded partial side view of the filtration system of FIG. 5B in accordance with aspects of the present disclosure.
FIG. 7 is an enlarged partial perspective view of the filter assembly of FIG. 5C in accordance with aspects of the present disclosure.

The figures are rendered primarily for clarity and, as a result, are not necessarily drawn to scale. Moreover, various structure/components, including but not limited to fasteners, electrical components (wiring, cables, etc.), and the like, may be shown diagrammatically or removed from some or all of the views to better illustrate aspects of the depicted embodiments, or where inclusion of such structure/components is not necessary to an understanding of the various exemplary embodiments described herein. The lack of illustration/description of such structure/components in a particular figure is, however, not to be interpreted as limiting the scope of the various embodiments in any way.

### Detailed Description

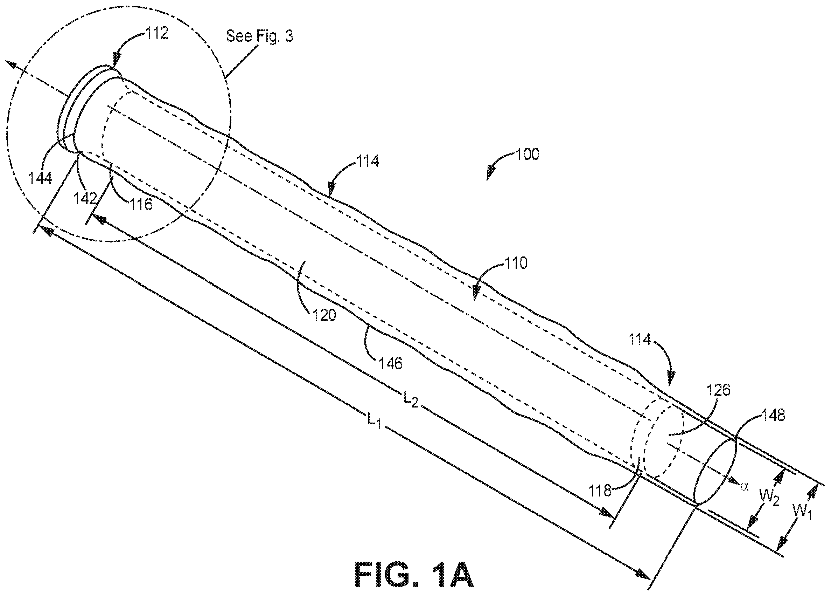

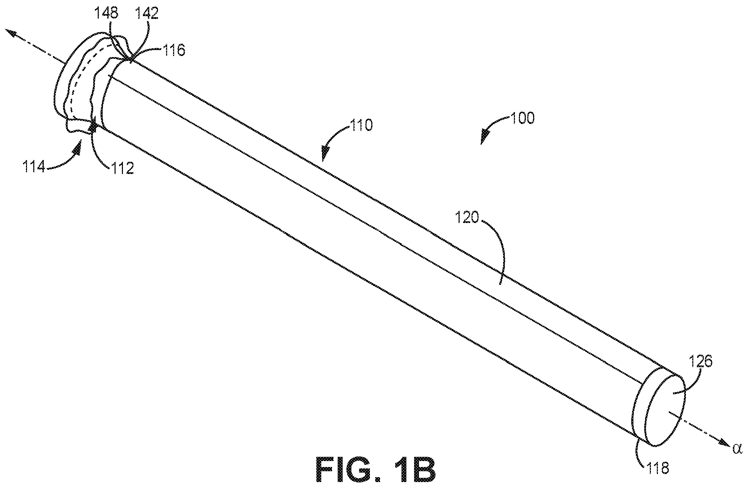

FIGS. 1A-1B are perspective views of an example filter assembly 100 in accordance with aspects of the present disclosure. The filter assembly 100 includes a filter media 110, an endcap 112, and a disposal container 114. The disposal container 114 is fixedly coupled to the endcap 112 and is selectively extendable over the filter media 110, as discussed further below. FIG. 1A illustrates the disposal container 114 in an extended state and FIG. 1B illustrates the disposal container 114 in a non-extended state.

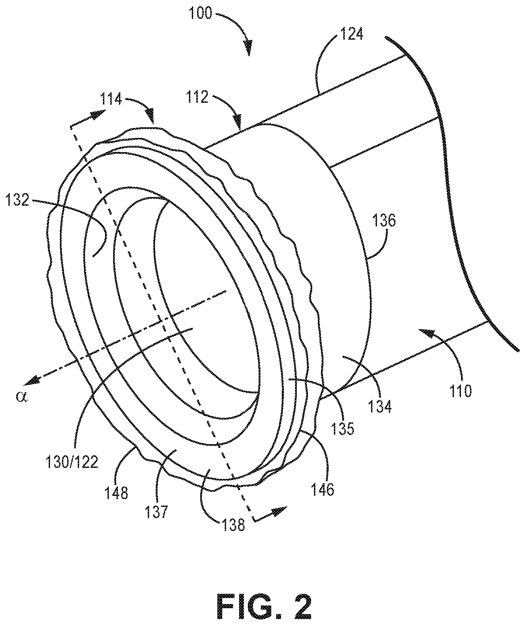

The filter media 110 has a first end 116 and a second end 118 opposite the first end 116. The filter media 110 has a filter body 120 extending between the first end 116 and the second end 118. The filter media 110 is generally configured to filter a fluid such as, for example a gaseous fluid, but in some other embodiments the filter media 110 is configured to filter a liquid. The filter media 110 is generally arranged about a central media opening 122 (see, e.g., FIG. 2). The filter media 110 and the central media opening 122 extends in an axial direction *a* from the first end 116 of the filter media 110 towards the second end 118 of the filter media 110.

The filter media 110 can be constructed of a variety of types of materials and combinations of materials. In some examples, filter media 110 can have an ovular cross-section or can have a circular cross-section (orthogonal to *a*). In some examples, the filter media 110 is in a pleated configuration including a plurality of pleats (not shown) extending in the axial direction *a*. The plurality of pleats can include exterior pleat folds defining an exterior perimeter, or boundary, of the filter media 110, and can include interior pleat folds defining an interior perimeter, or boundary, of the filter media 110. The interior perimeter, or boundary, defines the central media opening 122. In some examples, a liner (not shown) is disposed within the pleated filter media along the interior perimeter to mutually define the central media opening 122. In other examples, the filter media 110 is in a bag configuration that is one or more layers of filter media defining an open end at the first end 116, a closed end towards the second end 118, and the central media opening 122. Other types of filter media 110 can also be used.

With additional reference to FIG. 2, in some examples, the central media opening 122 defines a downstream side of the filter assembly 100 and an exterior surface 124 of the filter media 110 defines an upstream side of the filter assembly 100. In some other examples, the central media opening 122 defines an upstream side of the filter assembly 100 and an exterior surface 124 of the filter media 110 defines a downstream side of the filter assembly 100.

The second end 118 can be open or can be closed. In some examples, as illustrated in FIGS. 1A-1B, the second end 118 can be closed with a closure 126, for example, disposed along the second end 118 of the filter media 110. The closure 126 can generally be configured to obstruct the central media opening 122 at the second end 118 of the filter media 110. Particularly, the closure 126 can assist in defining a fluid flow pathway extending between the outside the filter assembly 100 and the central media opening 122 through the filter media 110. The closure 126 can be a second endcap coupled to the second end 118 of the filter media 110 in some examples, such as examples where the filter media 110 is in a pleated configuration. In other examples, the closure 126 can be a portion of the filter media 110 itself, such as where the filter media 110 is in a bag configuration.

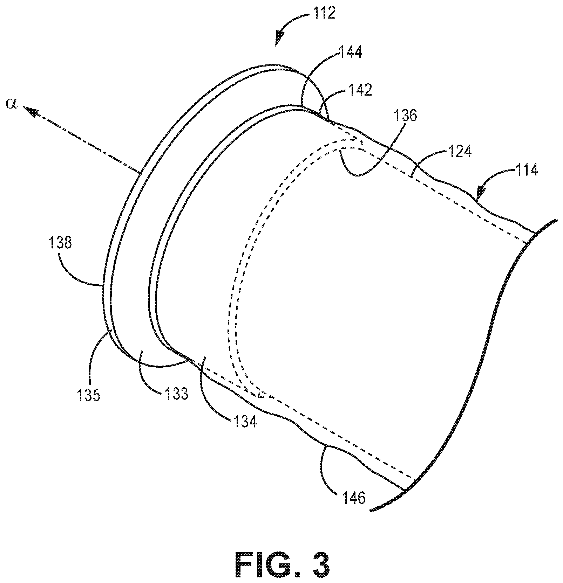

FIGS. 2 and 3 are enlarged partial perspective views of the filter assembly 100 illustrating the endcap 112 coupled to the first end 116 of the filter media 110 and the disposal container 114 fixedly coupled to the endcap 112. In particular, FIG. 2 illustrates the disposal container 114 fully disposed about the endcap 112 in the non-extended state, similar to FIG. 1B, and FIG. 3 illustrates the disposal container 114 extended from the endcap 112 in an extended state, similar to FIG. 1A. The endcap 112 is generally configured to form a seal with the filter media 110, as well as system components of a filtration system when the filter assembly 100 is installed in the filtration system, as described in more detail below.

With particular reference to the perspective view of FIG. 2, the endcap 112 defines an endcap opening 130 in communication with the central media opening 122. The endcap opening 130 is in fluid communication with the central media opening 122 such that fluid can pass there-through. The endcap 112 has an inner surface 132 abutting and surrounding the endcap opening 130, particularly visible in FIG. 2.

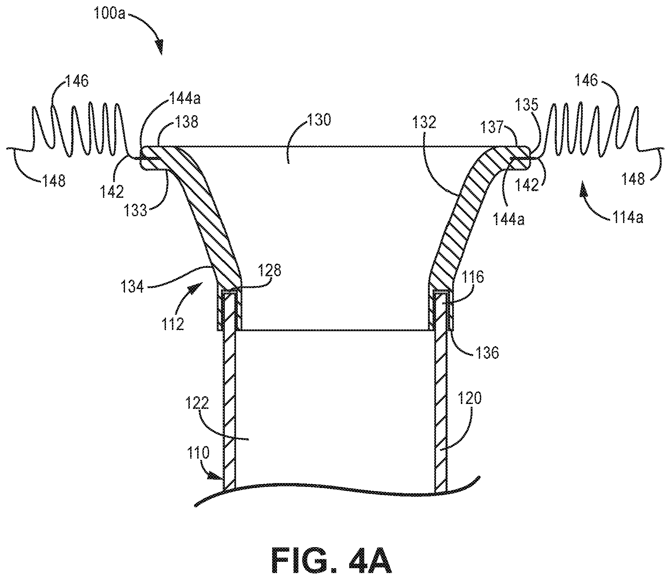

With continued reference to FIGS. 2 and 3, the endcap 112 includes an outer perimeter surface 134 extending between a first edge 136 and an endcap rim 138. The endcap rim 138 extends outward from the outer perimeter surface 134. The endcap rim 138 forms a first surface 133, a rim edge 135, and a second surface 137. The second surface 137 also defines the endcap opening 130. In some examples, the second surface 137 can form a generally planar surface extending orthogonally to the extension of the filter body 120 (i.e., the axial direction *a*). The endcap rim 138 can be configured to form a seal with system components of a corresponding filtration system in some examples. The first surface 133 can be planar, convex, or any other shape suitable to facilitate sealing of the endcap 112 with system components of the filtration system. With additional reference to the cross-sectional views of FIGS. 4A-4D, the endcap 112 defines a filter media receptacle 128 along the first edge 136 that is configured to receive the first end 116 of the filter media 110.

The endcap 112 can be constructed of various different types of materials and combinations of materials. In some examples, the endcap 112 is constructed of urethane. In some examples, the endcap 112 is constructed of a cast aluminum with a gasket material disposed across one or more surfaces and at least a portion of the first surface 133. In some examples, the endcap 112 is at least partially constructed of a material having a durometer between about 30 Shore A to 70 Shore A (ASTM D2240 - 15e1).

The disposal container 114 is fixedly coupled to the endcap 112 and is selectively extendable over the filter media 110 to selectively contain the filter media 110 for disposal of the filter assembly 100, as discussed further below. The disposal container 114 has a first container end 142 (hereinafter referred to as the "attachment end"), a second container end 148 (hereinafter referred to as a "terminal end"), and a receiving body 146. The disposal container 114 is fixedly coupled to the endcap 112 towards the attachment end 142. In general, the disposal container 114 is flexible and transitionable from a non-extended state (see, e.g., FIGS. 1B and 2) to an extended state (see, e.g., FIGS. 1A and 3). In a non-extended state of the disposal container 114, the receiving body 146 is positioned around the endcap 112 and does not extend along the filter body 120 of the filter media 110. In some examples, in a non-extended state of the disposal container 114, the attachment end 142, the terminal end 148 and the receiving body 146 are each positioned around the endcap 112. In an extended state, the terminal end 148 of the disposal container 114 is positioned to extend beyond the second end 118 of the filter media 110. In an extended state the filter body 120 is fully received within the receiving body 146 of the disposal container 114, as discussed further below.

The disposal container 114 can formed of a thin, flexible material to enable transition between non-extended and extended states. The disposal container 114 can be constructed of various different types of materials and combinations of materials suitable to facilitate containment of the filter media 110 and materials and particles accumulated onto the filter media 110 when in the extended state. In various examples, the disposal container 114 is constructed of a material impermeable to particulates. In some examples, the disposal container 114 is constructed of a polyurethane sheet-like material. In some examples, the disposal container 114 is constructed of high-density polyethylene. In some examples, the disposal container 114 can have a material thickness of 0.001-0.006 inches (0.0254-0.1524 millimeters). Other suitable material types and thicknesses are also acceptable. In one example, the terminal end 148 can include a marker, thickened edge, folded edge, or other suitable edge indicators/stiffeners to assist the user in locating, grasping, and/or attaching the terminal end 148 to a component of the filtration system, such as a tubesheet, for example. In some examples, the terminal end 148 can include a closure, such as a tie-out, for example. In some examples, the disposal container 114 is at least semi-transparent or translucent to provide visibility of the filter media state (e.g., dirty or clean) to the user, particularly when in the extended state.

The disposal container 114 can be formed of a size and shape complementary to the size and shape of the filter media 110 and suitable to extend over and encapsulate the filter media 110 when in an extended state. In general, the receiving body 146 forms a barrier wall extending between the attachment and terminal ends 142, 148. The ends 142, 148 are formed in an open configuration until fixedly coupled to endcap 112 or otherwise closed, respectively. In some examples, the disposal container 114 has a tubular shape. The disposal container 114 can also be generally rectangular, or other suitable shape, to accommodate and enclose the shape of the filter media 110. The disposal container 114 is sized to extend fully over and around the filter media 110. The disposal container 114 generally has inner dimensions along its cross-section, such as a diameter, width, and length, that is greater than corresponding outer cross-sectional dimensions of the filter media 110. Such a configuration can reduce or prevent the disposal container from rubbing against the exterior surface 124 of the filter media 110 and dislodging particles accumulated on the filter media 110 while being transitioned from the non-extended state to the extended state.

As stated above, the receiving body 146 of the disposal container 114 extends between the attachment end 142 and the terminal end 148 to selectively contain, or encapsulate, the filter media 110 (see also, e.g., FIGS. 1A-1B) when in an extended state. The receiving body 146 of the disposal container 114 has a length "Li" greater than a length "L₂" of the filter body 120 in the axial direction *a*. In one example, the length "Li" is such that the terminal end 148 can be extended past, or beyond, the second end 118 of the filter media 110 in order to be suitably closed and secured over the second end 118. For example, the terminal end 148 can be closed and secured with a tie closure or other suitable mechanism. In one example, the terminal end 148 can be tied in a knot to secure the terminal end 148 in a closed configuration. The receiving body 146 of the disposal container 114 has a width "Wi", or diameter, greater than the width "W₂", or diameter, of the filter body 120, where the respective widths are orthogonal to the axial direction *a*.

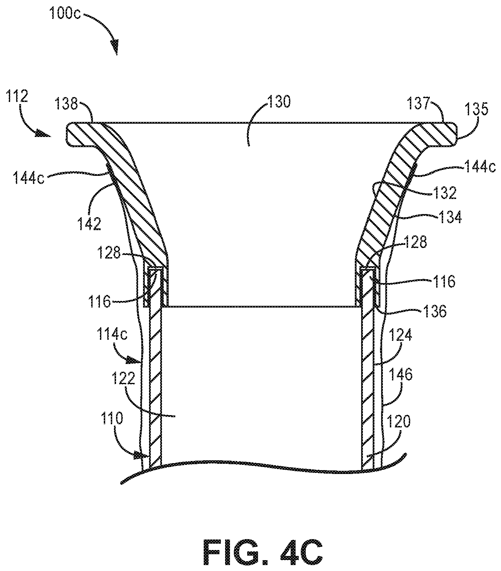

FIGS. 4A-4D depict cross-sectional views of example filter assemblies 100a-100d at the endcap 112 in a plane orthogonal to the axial direction *a*. More particularly, FIGS. 4A-4D are cross-sectional views of some example embodiments of the disposal container 114 fixedly coupled to the endcap 112 at the attachment end 142 of the disposal container 114. The disposal container 114 is flexible and transitionable from a non-extended state (see, e.g., FIGS. 4A-4B) to an extended state (see, e.g., FIGS. 4C-4D). The disposal container 114 can be in the non-extended state when the filter assembly 100 is disposed within a filtration system, such as during a filtering operation, and can be transitioned to the extended state during removal and disposal of the filter assembly 100 from the filtration system, as discussed further below.

A seal 144 is used to fixedly couple, or affix, the disposal container 114 to the endcap 112. Seal 144 is used generally herein to cumulatively refer to seals 144a-144d and disposal container 114 is used generally herein to cumulatively refer to disposal containers 114a-114c. In some examples, the seal 144 can extend fully around the endcap 112, towards the attachment end 142, in order to provide an uninterrupted seal of the attachment end 142 of the disposal container 114 to the endcap 112. In some examples, the seal 144 extends around the entire attachment end 142 to form a fluid seal between the disposal container 114 and the endcap 112. The seal 144 is configured to maintain the attachment of the disposal container 114 to the endcap 112 in both the non-extended state and the extended state. The seal 144 can have a thickness so as to limit interference with the assembly and seal of the filter assembly 100 within the filtration system, as described further below. In accordance with aspects of the disclosure, the disposal container 114 can be fixedly coupled to the endcap 112 with the seal 144 in a manner to facilitate use of the filter assembly 100 within a filtration system during filtering operations and removal of the filter assembly 100, as a unit, for disposal after use within the filtration system, for example.

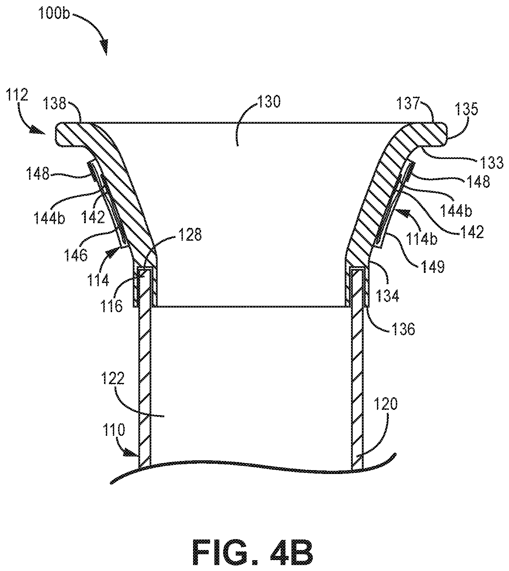

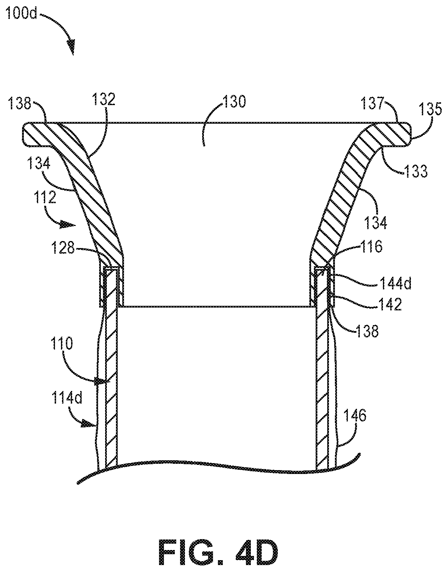

In some examples, such as illustrated in FIGS. 4A-4C, the filter assembly including the seal 144a-144c is disposed around the outer perimeter surface 134 of the endcap 112 to fixedly couple the disposal container 114a-114c to the endcap 112. In some examples, the seal 144 is positioned on or adjacent to the first surface 133 of the endcap rim 138. In some examples, the seal is disposed on or within the endcap rim 138, such as at the rim edge 135 (see, e.g., FIG. 4A). In other examples, such as illustrated in FIG. 4D, the seal 144d fixedly couples both (1) the attachment end 142 of the disposal container 114d to the endcap 112 and (2) the first end 116 of the filter media 110 within the filter media receptacle 128. However, the embodiments shown in figures 4b-4d do not fall under the scope of the claims and do not form part of the invention.

The seal 144 can be constructed of a variety of different materials and combinations of materials, where the element number 144 is used herein to cumulatively refer to elements 144a-144d. In some examples, the attachment end 142 of the disposal container 114 forms at least a portion of the seal 144. In some examples, the endcap 112 forms at least a portion of the seal 144.

According to the claimed invention, the seal 144 is defined by over-molding the endcap 112 to the attachment end 142 of the disposal container 114 such that the disposal container 114 is integral with the endcap 112. In some examples, the seal 144 additionally includes an adhesive.

In a non-extended state, such as illustrated in FIGS. 4A and 4B, the disposal container 114 is disposed, in its entirety, around the endcap 112. In other words, the attachment end 142, the receiving body 146, and the terminal end 148 of the disposal container 114 are all disposed around and adjacent to the endcap 112. In some examples, the disposal container 114 is maintained around the endcap 112 without extending into the endcap opening 130. In other words, in the non-extended state, the receiving body 146 and the terminal end 148 are disposed around the outer perimeter surface 134 and/or the rim edge 135 of the endcap 112. In some examples, the receiving body 146 and terminal end 148 are disposed adjacent to and/or circumferentially over the attachment end 142 at the endcap 112. In some examples, as illustrated in FIG. 4A, the disposal container 114 is loosely gathered (e.g., flaked) around the endcap 112 in a non-extended state. The terminal end 148 can be exposed to be grasped by a user for transitioning the disposal container 114 from a non-extended state to an extended state, for example. In other examples, such as illustrated in FIG. 4B, the disposal container 114 can be temporarily and releasably constrained or compressed in a non-extended state with a constraint 149 such as tape, releasable adhesive, bands, clips, or other suitable mechanism. In one example, the constraint 149 can include a releasable plastic seal can maintain the receiving body 146 and the terminal end 148 in a confined configuration against the endcap 112 until released.

As illustrated in the cross-sectional views of FIGS. 4C and 4D, the disposal container 114 has been released from a non-extended state, such as illustrated in FIGS. 4A and 4B, to transition the receiving body 146 (and terminal end 148) to extend along the filter body 120 and encase the filter media 110. The seal 144 maintains the attachment end 142 at the endcap 112 while in both the non-extended and extended states.

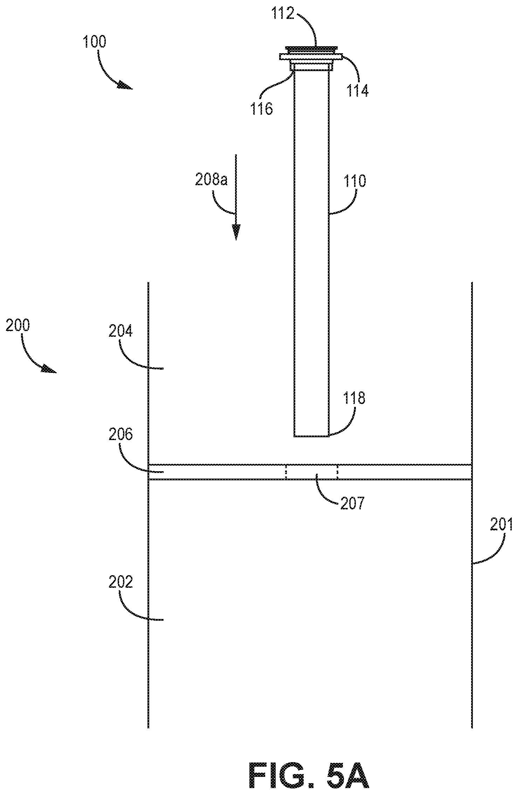

The filter assembly 100 is generally configured to be removably installed in a filtration system 200. FIGS. 5A-5D and FIGS. 6-7 illustrate various states of installation and removal of the filter assembly 100 with respect to the filtration system 200, as described in detail further below. The filter assembly 100 can be a replacement filter assembly. The filter assembly 100 can be removable and replaceable with a new filter assembly within the filtration system 200 when contaminated or "dirty". The filtration system 200, illustrated schematically, can be a dust collector system, or engine system, for example. In general terms, the filtration system 200 includes a housing 201 having a filtration portion 202, and a clean air plenum or portion 204, with a plate 206 (or tubesheet) extending between the filtration portion 202 and the clean air portion 204. The filtration system 200 can house one or more filter assemblies, with each filter assembly 100 extending into the filtration portion 202 from the clean air portion 204 through a tubesheet opening 207 of the tubesheet 206. The tubesheet 206 can define one or more tubesheet openings 207 each configured to secure the filter assembly 100 within the filtration system 200 and allow positioning of the filter media 110 within the filtration portion 202 of the filtration system 200. Each of the tubesheet openings 207 are configured to mate with the endcap of the filter assembly 100. The tubesheet 206 can support the filter assembly 100 within the filtration system 200. And, in particular, the endcap 112 of the filter assembly 100 is generally configured to form a seal with system components (e.g., tubesheet 206) such that clean air plenum 204 is isolated from the unfiltered fluid of the filtration portion 202.

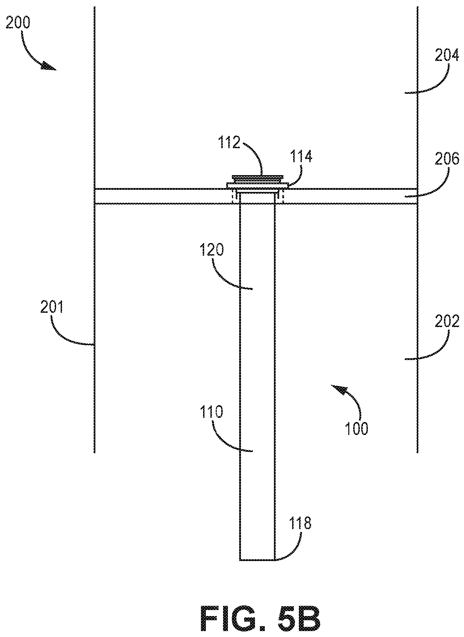

As illustrated in the schematic side view of FIG. 5A, prior to or in the process of installation of the filter assembly 100 within the filtration system 200, the filter assembly 100 can be positioned within the clean air portion 204. More particularly, the filter assembly 100 can be positioned adjacent to, or above, a tubesheet opening 207 of the tubesheet 206. The filter assembly 100 can be axially aligned with the tubesheet opening 207 for insertion through the tubesheet opening 207 orthogonal to the plate 206, or tubesheet, until the endcap 112 abuts the tubesheet 206. Prior to and/or during insertion of the filter assembly 100 into the opening 207, the disposal container 114 is disposed around the endcap 112 in a non-extended state, as discussed above. In this state, the disposal container 114 does not cover or extend over the filter media 110 or interfere with insertion of the filter media 110 through the opening 207. As indicated with arrow 208a, the filter assembly 100 is moved toward through the plate, or tubesheet, slidably moved into an operational position within the filtration system 200, as illustrated in FIG. 5B.

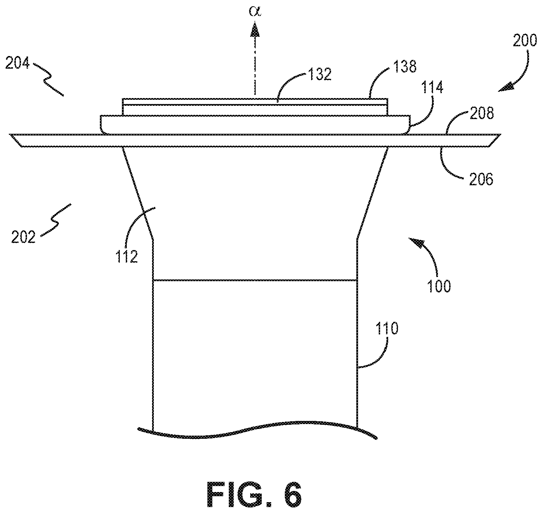

FIG. 5B illustrates a side view of the filter assembly 100 fully assembled within the filtration system 200 in operational position. With additional reference to FIG. 6, which is an expanded partial side view of FIG. 5B, the endcap 112 is sealed against the tubesheet 206 and/or other component of the filtration system 200, with the disposal container 114 disposed around the endcap 112 in the clean air portion 204. The filter media 110 is disposed within the filtration portion 202 of the filtration system 200. In this state, the filter media 110 is exposed for filtration and contaminant, or particle, accumulation onto the filter media 110. The disposal container 114 remains disposed outside of the filtration portion 202 of the filtration system 200 during the operational state.

The disposal container 114 can be maintained along a surface 208 of the tubesheet 206 on the clean air side 204 and adjacent to the endcap 112 with the endcap opening 130 exposed. In some confirmations, the disposal container 114 is maintained between the surface 208 of the tubesheet 206 and the endcap 112. The disposal container 114 does not interfere with sealing of the endcap 112 with respect to the tubesheet 206. In some examples, the disposal container 114 can extend from within the tubesheet opening 207 to the clean air portion 204 of the filtration system 200. For example, the disposal container 114 extends between the endcap 112 and the tubesheet 206. In some examples, such as where the attachment end of the disposal container 114 is disposed at the rim edge 135 of the endcap 112, the disposal container 114 can be disposed entirely within the clean air portion 204. The disposal container 114 can remain contained or constrained in a non-extended state or can be freely disposed (e.g., flaked) in the non-extended state. Alternatively, or additionally, the receiving body 146 and/or the terminal end 148 can be repositioned or adjusted during or after installation of the filter assembly 100 within the tubesheet opening 207 of the tubesheet 206 or on the surface 208 of the tubesheet 206.

The terminal end 148 of the disposal container 114 can be releasably secured within the clean air portion 204 of the filtration system 200. In some examples, the terminal end 148 is releasably secured with adhesive, tape, clips, o-rings, or other mechanism to the tubesheet 206 or other component of the filtration system 200. For example, the terminal end 148 can be attached to the surface 208 of the tubesheet 206 with a removal clip or other fastening mechanism (not shown). In some examples, the disposal container 114 is "flaked" or otherwise disposed to facilitate ease of transitioning the disposal container 114 from the non-extended state to the extended state when desired. The disposal container 114 is disposed around the endcap 112 and does not extend over the endcap opening 130. The disposal container 114 can remain in a non-extended state until moved from the non-extended state by a user. The disposal container 114 in the non-extended state, is positioned around the endcap 112 can be in a compressed form to not interfere with the operation of the filtration system 200. In some examples, the disposal container 114 can be further contained or secured on the surface 208 and endcap 112 to maintain the disposal container 114 in the non-extended state until removal and disposal of the filter assembly 100. For example, the disposal container 114 in the non-extended state can be maintained on the surface 208 and/or endcap 112 so as to not cause interference or hazard (e.g., tripping) as a user moves across the tubesheet 206 to perform maintenance or other tasks.

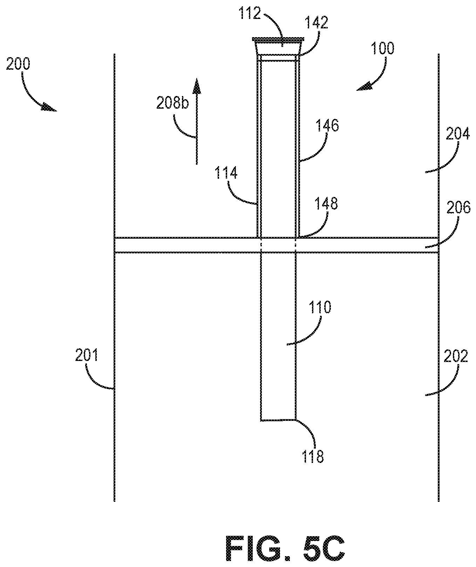

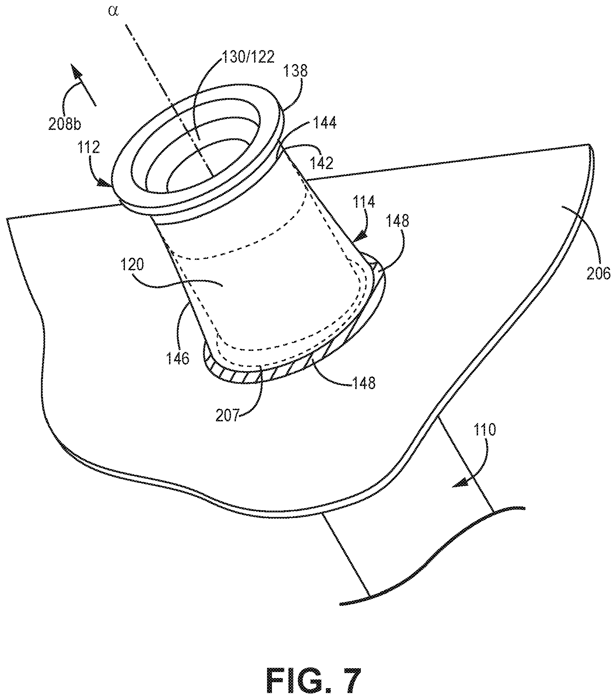

With reference to the side view of FIG. 5C and the expanded partial perspective view of FIG. 7, as the filter assembly 100 pulled in the direction indicated with arrow 208b for removal from the filtration system 200, the filter assembly 100 is slidably withdrawn from the filtration portion 202 and through the opening 207 of the tubesheet 206. As the filter assembly 100 is withdrawn along the axis *a*, the disposal container 114 is extended along the length of the filter media body in response to the axial translation of the filter assembly 100 away from the tubesheet 206, in particular, the endcap 112 and the filter media 110, in the direction indicated by arrow 208b. In one example, the disposal container 114 can be extended via gravity, or gravity assisted, as the filter assembly 100 is pulled in the direction of arrow 208b. In some examples, the terminal end 148 of the disposal container 114 remains attached along the surface 208 of the tubesheet 206. For example, the releasable securement of the terminal end 148 of the disposal container 114 to the tubesheet 206 or other element of the filtration system 200 can facilitate the extension of the receiving body 146 of the disposal container 114 over the filter assembly 100 as the filter assembly 100 is removed from the filtration portion 202 of the filtration system 200.

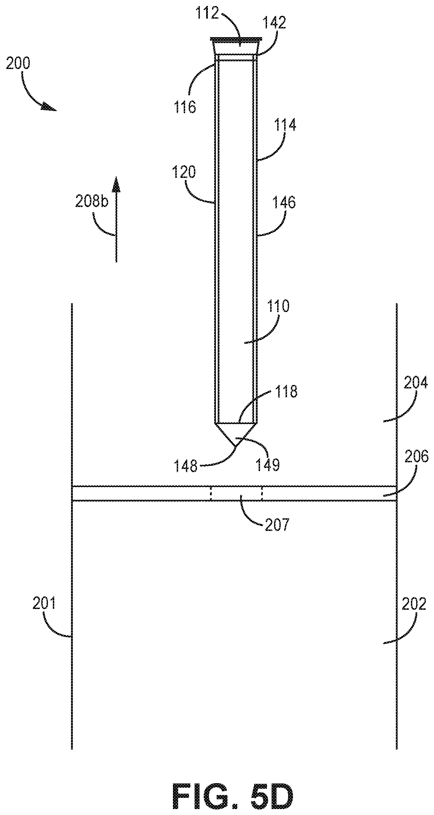

As illustrated in FIG. 5D, the filter media 110 has been completely withdrawn from the filtration portion 202 and the tubesheet 206 and into the clean air portion 204 of the filtration system 200 and the disposal container 114 has been transitioned to an extended state. In examples, the terminal end 148 has been released from the tubesheet 206. For example, if the terminal end 148 was releasably secured to the tubesheet 206 with a removal clip, the clip can be manually released, or opened. In another example, if the terminal end 148 was releasably secured to the tubesheet 206 with adhesive, the adhesive is manually separated from one or both of the terminal end 148 and the tubesheet 206. The receiving body 146 of the disposal container 114 is extended fully along and around the filter body 120 and the terminal end 148 extends past the second end 118 of the filter media 110. The terminal end 148 can be closed to encapsulate the filter media 110 of the filter assembly 100 and particles disposed thereon. The terminal end 148 can be closed and/or secured with a constraint 149 such a tie member, tape, forming a knotted closure, or any other suitable closure without further movement or transportation of the filter assembly. The filter media 110 is fully enclosed for further removal and disposal. In this manner, the filter element 100 is removed from the filtration system 200 with minimal disruption and dislodgement of the contaminants or particles accumulated onto the filter media 110.

The filter assembly 100 can be transported with the disposal container 114 in either of the extended or non-extended states. For example, the filter assembly 100 can be transported with the disposal container 114 configured in the non-extended state from the manufacturing facility to the user. The disposal container 114 can provide for easy and convenient clean disposal of used filter media by enclosing the filter media.

It should also be noted that, as used in this specification and the appended claims, the phrase "configured" describes a system, apparatus, or other structure that is constructed or configured to perform a particular task or adopt a particular configuration. The word "configured" can be used interchangeably with similar words such as "arranged", "constructed", "manufactured", and the like.

All publications and patent applications in this specification are indicative of the level of ordinary skill in the art to which this technology pertains.

This application is intended to cover adaptations or variations of the present subject matter. It is to be understood that the above description is intended to be illustrative, and not restrictive, and the claims are not limited to the illustrative embodiments as set forth herein.

## Claims

1. A filter assembly (100) comprising:
a filter media (110) comprising a first end (116), a second end (118) opposing the first end (116), and a filter body (120) extending between the first end (116) and the second end (118), wherein the filter media (110) is arranged about a central media opening (122) and wherein the filter media and the central media opening (122) extend in an axial direction (α);
an endcap (112) coupled to the filter media (110) along the first end (116), wherein the endcap (112) defines an endcap opening (130), and wherein the endcap opening (130) is in fluid communication with the central media opening (122); and
a disposal container (114) extendable beyond the second end (118) of the filter media (110) to sealably contain the filter body (120),
wherein the disposal container (114) comprises a first end (142) and a second end (148) opposing the first end (142), wherein the first end (142) is fixedly coupled to the endcap (112) with a seal (144), and
wherein the seal (144) is defined by over-molding the endcap (112) to the first end (142) of the disposal container (114) such that the disposal container (114) is integral with the endcap (112).

2. The filter assembly of claim 1, wherein the disposable container (114) is disposed around the endcap (112) and does not extend over the endcap opening (130).

3. The filter assembly of claim 1 or 2, wherein the disposal container (114) includes a receiving body (146) extending between said opposing first and second ends (142, 148) and having a length (L1) greater than a length (L2) of the filter body (120) in the axial direction (α).

4. The filter assembly of claim 3, wherein in a non-extended state of the disposal container (114), the first end (142), the second end (148) and the receiving body (146) are each positioned around the endcap (112).

5. The filter assembly of any one of the preceding claims, wherein the disposal container (114) comprises a flexible liner.

6. The filter assembly of any one of claims 1-5, wherein the disposal container (114) is fixedly coupled to an exterior surface of the endcap (112).

7. The filter assembly of any one of claims 1-6, wherein the disposal container (114) in a non-extended state is fully disposed around a perimeter of the endcap (112).

8. The filter assembly of any one of claims 1-7, wherein the disposal container (114) is formed to correspond to an exterior of the filter body (120) when in an extended state.

9. The filter assembly of any one of claims 1-8, wherein the disposal container (114) has a non-extended state and an extended state, wherein the first end (142) and the second end (148) of the disposal container (114) are disposed adjacent the endcap (112) in the non-extended state, wherein the second end (148) of the disposal container (114) extends beyond the second end (118) of the filter media (110) in the extended state.

10. The filter assembly of claim 9, in the extended state of the disposable container (114) the receiving body (146) of the disposal container (114) is extended fully along and around the filter body (120) and the terminal end (148) extends past the second end (118) of the filter media (110).

11. The filter assembly of claim 9 or 10, wherein the second end (148) of the disposal container (114) is configured to be open in the non-extended state and is further configured to be closed in the extended state.

12. The filter assembly of any one of the preceding claims, wherein the disposal container (114) is configured to be in a compressed state around a perimeter of the endcap (112) until extended to sealably contain the filter body (120).

13. A filter system, comprising:
a filter housing (201) comprising a clean air portion (204) and a filtration portion (202), wherein the clean air portion and the filtration portion are separated by a plate (206);
a filter assembly (100) according to any one of the preceding claims, wherein the filter assembly (100) is removably disposable within the filter housing (201), wherein the disposal container (114) of the filter assembly is disposed within the clean air portion of the filter housing (201) when the filter assembly is in use, and wherein the disposal container (114) is extendable from the endcap (112) beyond the second end (118) of the filter media (110) to sealably contain the filter body (120) when the filter media (110) is removed from the filter housing.

14. The filter system of claim 13, wherein the second end (148) of the disposal container (114) is releasably attachable to the plate (206).

15. The filter system of claim 13 or 14, wherein the disposal container (114) is extendable within the clean air portion (204) when the filter media (110) is withdrawn from the filtration portion (202) into the clean air portion (204).

## Patentansprüche

1. Filteranordnung (100), umfassend:
ein Filtermedium (110), das ein erstes Ende (116), ein dem ersten Ende (116) gegenüberliegendes zweites Ende (118) und einem Filterkörper (120) umfasst, der sich zwischen dem ersten Ende (116) und dem zweiten Ende (118) erstreckt, wobei das Filtermedium (110) um eine zentrale Mediumsöffnung (122) angeordnet ist und wobei sich das Filtermedium und die zentrale Mediumsöffnung (122) in einer axialen Richtung (α) erstrecken;
eine Endkappe (112), die entlang des ersten Endes (116) mit dem Filtermedium (110) verbunden ist, wobei die Endkappe (112) eine Endkappenöffnung (130) definiert und wobei die Endkappenöffnung (130) in Fluidverbindung mit der zentralen Mediumsöffnung (122) steht; und
einen Entsorgungsbehälter (114), der über das zweite Ende (118) des Filtermediums (110) hinaus erweiterbar ist, um den Filterkörper (120) abdichtend aufzunehmen,
wobei der Entsorgungsbehälter (114) ein erstes Ende (142) und ein dem ersten Ende (142) gegenüberliegendes zweites Ende (148) umfasst, wobei das erste Ende (142) fest mit der Endkappe (112) mit einer Dichtung verbunden ist, und
wobei die Dichtung (144) durch Überformen der Endkappe (112) an das erste Ende (142) des Entsorgungsbehälters (114) definiert ist, so dass der Entsorgungsbehälter (114) einstückig mit der Endkappe (112) ist.

2. Filteranordnung nach Anspruch 1, wobei der Entsorgungsbehälter (114) um die Endkappe (112) herum angeordnet ist und sich nicht über die Endkappenöffnung (130) erstreckt.

3. Filteranordnung nach Anspruch 1 oder 2, wobei der Entsorgungsbehälter (114) einen Aufnahmekörper (146) enthält, der sich zwischen den gegenüberliegenden ersten und zweiten Enden (142, 148) erstreckt und eine Länge (L1) aufweist, die größer ist als die Länge (L2) des Filterkörpers (120) in axialer Richtung (α).

4. Filteranordnung nach Anspruch 3, wobei in einem nicht erweiterten Zustand des Entsorgungsbehälters (114) das erste Ende (142), das zweite Ende (148) und der Aufnahmekörper (146) jeweils um die Endkappe (112) herum positioniert sind.

5. Filteranordnung nach einem der vorhergehenden Ansprüche, wobei der Entsorgungsbehälter (114) eine flexible Auskleidung umfasst.

6. Filteranordnung nach einem der Ansprüche 1-5, wobei der Entsorgungsbehälter (114) fest mit einer Außenfläche der Endkappe (112) verbunden ist.

7. Filteranordnung nach einem der Ansprüche 1-6, wobei der Entsorgungsbehälter (114) in einem nicht erweiterten Zustand vollständig um einen Umfang der Endkappe (112) herum angeordnet ist.

8. Filteranordnung nach einem der Ansprüche 1-7, wobei der Entsorgungsbehälter (114) so geformt ist, dass er einem Äußeren des Filterkörpers (120) entspricht, wenn er sich in einem erweiterten Zustand befindet.

9. Filteranordnung nach einem der Ansprüche 1-8, wobei der Entsorgungsbehälter (114) einen nicht erweiterten Zustand und einen erweiterten Zustand aufweist, wobei das erste Ende (142) und das zweite Ende (148) des Entsorgungsbehälters (114) im nicht erweiterten Zustand benachbart zur Endkappe (112) angeordnet sind, wobei sich das zweite Ende (148) des Entsorgungsbehälters (114) im erweiterten Zustand über das zweite Ende (118) des Filtermediums (110) hinaus erstreckt.

10. Filteranordnung nach Anspruch 9, wobei im erweiterten Zustand des Entsorgungsbehälters (114) der Aufnahmekörper (146) des Entsorgungsbehälters (114) vollständig entlang und um den Filterkörper (120) herum erweitert ist und das Endstück (148) über das zweite Ende (118) des Filtermediums (110) hinausragt.

11. Filteranordnung nach Anspruch 9 oder 10, wobei das zweite Ende (148) des Entsorgungsbehälters (114) so konfiguriert ist, dass es im nicht erweiterten Zustand offen ist, und ferner so konfiguriert ist, dass es im erweiterten Zustand geschlossen ist.

12. Filteranordnung nach einem der vorhergehenden Ansprüche, wobei der Entsorgungsbehälter (114) so konfiguriert ist, dass er sich in einem komprimierten Zustand um einen Umfang der Endkappe (112) herum befindet, bis er erweitert wird, um den Filterkörper (120) abdichtend aufzunehmen.

13. Filtersystem, umfassend:
ein Filtergehäuse (201), das einen Reinluftabschnitt (204) und einen Filtrationsabschnitt (202) umfasst, wobei der Reinluftabschnitt und der Filtrationsabschnitt durch eine Platte (206) getrennt sind;
eine Filteranordnung (100) nach einem der vorhergehenden Ansprüche, wobei die Filteranordnung herausnehmbar in dem Filtergehäuse (201) angeordnet ist, wobei der Entsorgungsbehälter (114) der Filteranordnung in dem Reinluftabschnitt des Filtergehäuses (201) angeordnet ist, wenn die Filteranordnung in Gebrauch ist, und wobei der Entsorgungsbehälter (114) von der Endkappe (112) über das zweite Ende (118) des Filtermediums (110) erweiterbar ist, um den Filterkörper (120) abdichtend aufzunehmen, wenn das Filtermedium (110) aus dem Filtergehäuse entfernt wird.

14. Filtersystem nach Anspruch 13, wobei das zweite Ende (148) des Entsorgungsbehälters (114) lösbar an der Platte (206) abgebracht werden kann.

15. Filtersystem nach Anspruch 13 oder 14, wobei der Entsorgungsbehälter (114) innerhalb des Reinluftabschnitts (204) erweiterbar ist, wenn das Filtermedium (110) aus dem Filtrationsabschnitt (202) in den Reinluftabschnitt (204) zurückgezogen wird.

## Revendications

1. Ensemble filtre (100) comprenant :
un milieu filtrant (110) comprenant une première extrémité (116), une seconde extrémité (118) opposée à la première extrémité (116), et un corps de filtre (120) s'étendant entre la première extrémité (116) et la seconde extrémité (118), dans lequel le milieu filtrant (110) est agencé autour d'une ouverture centrale de milieu (122) et dans lequel le milieu filtrant et l'ouverture centrale de milieu (122) s'étendent dans une direction axiale (α) ;
un capuchon d'extrémité (112) accouplé au milieu filtrant (110) le long de la première extrémité (116), dans lequel le capuchon d'extrémité (112) définit une ouverture de capuchon d'extrémité (130), et dans lequel l'ouverture de capuchon d'extrémité (130) se trouve en communication fluidique avec l'ouverture centrale de milieu (122) ; et
un récipient de déchets (114) pouvant être déployé au-delà de la seconde extrémité (118) du milieu filtrant (110) pour contenir de manière étanche le corps de filtre (120),
dans lequel le récipient de déchets (114) comprend une première extrémité (142) et une seconde extrémité (148) opposée à la première extrémité (142), dans lequel la première extrémité (142) est accouplée de manière fixe au capuchon d'extrémité (112) avec un joint d'étanchéité (144), et
dans lequel le joint d'étanchéité (144) est défini par surmoulage du capuchon d'extrémité (112) à la première extrémité (142) du récipient de déchets (114) de sorte que le récipient de déchets (114) est solidaire du capuchon d'extrémité (112).

2. Ensemble filtre selon la revendication 1, dans lequel le récipient de déchets (114) est disposé autour du capuchon d'extrémité (112) et ne s'étend pas sur l'ouverture du capuchon d'extrémité (130).

3. Ensemble filtre selon la revendication 1 ou 2, dans lequel le récipient de déchets (114) inclut un corps de réception (146) s'étendant entre lesdites première et seconde extrémité (142, 148) opposées et ayant une longueur (L1) supérieure à une longueur (L2) du corps de filtre (120) dans la direction axiale (α).

4. Ensemble filtre selon la revendication 3, dans lequel sous un état non déployé du récipient de déchets (114), la première extrémité (142), la seconde extrémité (148) et le corps de réception (146) sont chacun positionnés autour du capuchon d'extrémité (112).

5. Ensemble filtre selon l'une quelconque des revendications précédentes, dans lequel le récipient de déchets (114) comprend une doublure souple.

6. Ensemble filtre selon l'une quelconque des revendications 1 à 5, dans lequel le récipient de déchets (114) est accouplé de manière fixe à une surface extérieure du capuchon d'extrémité (112).

7. Ensemble filtre selon l'une quelconque des revendications 1 à 6, dans lequel le récipient de déchets (114) sous un état non déployé est entièrement disposé autour d'un périmètre du capuchon d'extrémité (112).

8. Ensemble filtre selon l'une quelconque des revendications 1 à 7, dans lequel le récipient de déchets (114) est formé pour correspondre à un extérieur du corps de filtre (120) lorsqu'il se trouve sous un état déployé.

9. Ensemble filtre selon l'une quelconque des revendications 1 à 8, dans lequel le récipient de déchets (114) présente un état non déployé et un état déployé, dans lequel la première extrémité (142) et la seconde extrémité (148) du récipient de déchets (114) sont disposées adjacentes au capuchon d'extrémité (112) sous l'état non déployé, dans lequel la seconde extrémité (148) du récipient de déchets (114) s'étend au-delà de la seconde extrémité (118) du milieu filtrant (110) sous l'état déployé.

10. Ensemble filtre selon la revendication 9, sous l'état déployé du récipient de déchets (114), le corps de réception (146) du récipient de déchets (114) s'étend entièrement le long et autour du corps de filtre (120) et l'extrémité terminale (148) s'étend au-delà de la seconde extrémité (118) du milieu filtrant (110).

11. Ensemble filtre selon la revendication 9 ou 10, dans lequel la seconde extrémité (148) du récipient de déchets (114) est configurée pour être ouverte sous l'état non déployé et est en outre configurée pour être fermée sous l'état déployé.

12. Ensemble filtre selon l'une quelconque des revendications précédentes, dans lequel le récipient de déchets (114) est configuré pour se trouver sous un état comprimé autour d'un périmètre du capuchon d'extrémité (112) jusqu'à ce qu'il soit déployé pour contenir de manière étanche le corps de filtre (120).

13. Système filtre, comprenant :
un logement de filtre (201) comprenant une portion d'air propre (204) et une portion de filtration (202), dans lequel la portion d'air propre et la portion de filtration sont séparées par une plaque (206) ;
un ensemble filtre (100) selon l'une quelconque des revendications précédentes, dans lequel l'ensemble filtre (100) peut être jeté de manière amovible à l'intérieur du logement de filtre (201), dans lequel le récipient de déchets (114) de l'ensemble filtre est disposé à l'intérieur de la portion d'air propre du logement de filtre (201) lorsque l'ensemble filtre se trouve en cours d'utilisation, et dans lequel le récipient de déchets (114) peut être déployé du capuchon d'extrémité (112) au-delà de la seconde extrémité (118) du milieu filtrant (110) pour contenir de manière étanche le corps de filtre (120) lorsque le milieu filtrant (110) est retiré du logement de filtre.

14. Système filtre selon la revendication 13, dans lequel la seconde extrémité (148) du récipient de déchets (114) est fixé de manière amovible à la plaque (206).

15. Système filtre selon la revendication 13 ou 14, dans lequel le récipient de déchets (114) peut être déployé à l'intérieur de la portion d'air propre (204) lorsque le milieu filtrant (110) est retiré de la portion de filtration (202) dans la portion d'air propre (204).
